(19)

Europäisches Patentamt

European Patent Office

Office européen des brevets

(11) **EP 3 048 708 A1**

(12) **EUROPÄISCHE PATENTANMELDUNG**

(43) Veröffentlichungstag:
**27.07.2016 Patentblatt 2016/30**

(51) Int Cl.:
***H02K 9/08*** *(2006.01)* ***H02K 9/12*** *(2006.01)*
***H02K 9/18*** *(2006.01)*

(21) Anmeldenummer: **15152508.6**

(22) Anmeldetag: **26.01.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft 80333 München (DE)**

(72) Erfinder: **Huber, Norbert 91056 Erlangen (DE)**

(54) **Verfahren zum Kühlen eines Generators**

(57) Die Erfindung betrifft ein Verfahren zum Kühlen eines Generators unter Verwendung eines den Generator durchströmenden Kühlmediums, wobei eine Dichte des Kühlmediums in einem Leerlaufbetrieb des Generators, in dem der Generator passiv mit einer Netz-Frequenz eines Netzes mitdreht, an das der Generator angeschlossen ist, gegenüber einer Dichte des Kühlmediums in einem Lastbetrieb des Generators reduziert wird.

EP 3 048 708 A1

**Beschreibung**

Die Erfindung betrifft ein Verfahren zum Kühlen eines Generators unter Verwendung eines den Generator durchströmenden Kühlmediums.

Große Kraftwerksgeneratoren, insbesondere in Form von Turbogeneratoren, haben typischerweise einen Wirkungsgrad von 99%. Das heißt lediglich 1% der mechanischen Leistung wird nicht in elektrischen Strom, sondern in Wärme umgewandelt, die durch besondere Kühlmaßnahmen aus einem Generator abgeführt werden muss, um vorgegebene Maximaltemperaturen nicht zu überschreiten.

Im Zuge größerer Verbreitung dezentraler regenerativer Stromerzeugung werden sogenannte Phasenschieber-Generatoren benötigt, die zeitweise in einem Lastbetrieb Blindleistung in Wirkleistung umwandeln und zeitweise in einem Leerlaufbetrieb nur passiv mit einer Netz-Frequenz eines Netzes mitdrehen, an das sie angeschlossen sind.

Zur internen Kühlung bzw. Belüftung von Turbogeneratoren werden herkömmlich Axiallüfter eingesetzt, die auf einer Welle eines Turbogenerators angeordnet sind und einen Kühlluftstrom liefern. Die Verluste eines solchen Turbogenerators untergliedern sich in elektrische Verluste, insbesondere ohmsche Verluste und Wirbelstromverluste, in Luftreibungsverluste aufgrund der Drehung von Rotorkomponenten des Turbogenerators, vor allem in einem Spalt zwischen den Rotorkomponenten und Statorkomponenten des Turbogenerators, und in Luftumwälzungsverluste durch den zu erzeugenden Kühlluftvolumenstrom.

Während eines Leerlaufbetriebs eines Turbogenerators reduzieren sich die elektrischen Verluste zwar um die ohmschen Verluste im Stator des Turbogenerators, Luftreibungsverluste und Luftumwälzungsverluste bleiben aber bei Turbogeneratoren mit interner Lüftung erhalten und fallen dann aufgrund des fehlenden Leistungsumsatzes stark ins Gewicht. Der zur Kühlung notwendige Luftvolumenstrom während des Leerlaufbetriebs kann deutlich kleiner ausfallen.

Die Luftreibungsverluste können abgeschätzt werden (vgl. Bohl, Elmendorf: Technische Strömungslehre) mit Beziehungen der Form

$$\dot{Q} = C_M * {}^{\rho}\!/_2 * \omega^3 * R^5 \,.$$

Das heißt, die Verlustleistung $\dot{Q}$ steigt mit der fünften Potenz des Radius R und der dritten Potenz der Winkelgeschwindigkeit $\omega$ an und ist proportional zur Luftdichte p des Kühlmediums, das üblicherweise Luft ist. $C_M$ ist ein Reibungsbeiwert. Die Luftumwälzungsverluste steigen ebenfalls mit der Dichte des Kühlmediums an.

Bei einer rotierenden elektrischen Maschine kann statt einer internen Belüftung eine externe Belüftung zur Kühlung verwendet werden, die unabhängig von Drehzahl oder Last der rotierenden elektrischen Maschine realisiert werden kann, jedoch zusätzliche Komponenten benötigt.

Luftgekühlte Generatoren können bis zu einer Leistungsgröße von etwa 400 MW realisiert werden, darüber dominiert die Luftreibung. Bei größeren Generatoren wird dann üblicherweise mit Wasserstoff als Kühlmedium gekühlt, was erhöhte Anforderungen an die Dichtheit eines Gehäuses eines Generators und die Sicherheit stellt.

Aufgabe der Erfindung ist es, die Effizienz von Generatoren, insbesondere Phasenschieber-Generatoren, zu erhöhen.

Nach dem erfindungsgemäßen Verfahren zum Kühlen eines Generators unter Verwendung eines den Generator durchströmenden Kühlmediums wird eine Dichte des Kühlmediums in einem Leerlaufbetrieb des Generators, in dem der Generator passiv mit einer Netz-Frequenz eines Netzes mitdreht, an das der Generator angeschlossen ist, zumindest zeitweise gegenüber einer Dichte des Kühlmediums in einem Lastbetrieb des Generators reduziert.

Erfindungsgemäß können zumindest zeitweise während eines Leerlaufbetriebs des Generators, wenn also eine geringere Wärmeabfuhr notwendig ist, die Luftreibungsverluste durch eine geringere Dichte des Kühlmediums reduziert werden. Dadurch kann im Leerlaufbetrieb ein geringerer Leistungsbedarf realisiert und die Kühlung gewährleistet werden, ohne zusätzliche Komponenten, wie beispielsweise externe Lüfter, zu benötigen. Dies ist insbesondere bei einem höheren zeitlichen Anteil von Leerlaufphasen mit einer deutlichen Erhöhung der Gesamteffizienz des Generators verbunden.

Die Dichte des Kühlmediums kann auch während des gesamten Leerlaufbetriebs entsprechend gegenüber der Dichte des Kühlmediums in einem Lastbetrieb des Generators reduziert werden. Das Kühlmedium kann beispielsweise Luft enthalten.

Die Dichte des Kühlmediums in dem Leerlaufbetrieb wird bevorzugt durch eine Erhöhung einer Rückkühltemperatur reduziert, die zum Rückkühlen des Kühlmediums verwendet wird. Hiernach wird im Leerlaufbetrieb des Generators statt der im Lastbetrieb des Generators notwendigen Rückkühltemperatur eine demgegenüber erhöhte Rückkühltemperatur verwendet, was mit einer Verringerung der Temperatur des Kühlmediums und dadurch mit einer geringeren Dichte des Kühlmediums einhergeht. Die Erhöhung der Rückkühltemperatur kann beispielsweise durch eine höhere Strömungsgeschwindigkeit eines Kühlfluids in einem Rückkühlkreislauf oder eine sonstige Maßnahme zu dessen Leistungssteigerung bewirkt werden.

Bevorzugt wird die Dichte des Kühlmediums in dem Leerlaufbetrieb durch eine Erhöhung einer Luftfeuchte des Kühlmediums reduziert. Insbesondere bei der Verwendung von Luft als Kühlmedium kann hierdurch wegen der geringeren molaren Masse von Wasser die Dichte des Kühlmediums reduziert werden, wobei das Kühlmedium mit dem Wasser befeuchtet wird. Im Lastbetrieb des Generators ist eine solche Erhöhung der Luftfeuchtigkeit des Kühlmediums wegen einer einzuhaltenden Durchschlagfestigkeit nicht möglich.

Die Dichte des Kühlmediums in dem Leerlaufbetrieb wird bevorzugt durch ein zumindest teilweises Ersetzen des Kühlmediums durch Stickstoff reduziert. Reiner Stickstoff weist eine geringere Dichte als Luft auf. Je mehr Luft durch Stickstoff ersetzt wird, desto geringer ist die Dichte des gebildeten Kühlmediums. Bei dieser Ausgestaltung muss der Generator mit einem geschlossenen Kreislauf gekühlt werden, in dem das Kühlmedium zirkuliert. Ein Gehäuse des Generators muss hierzu abgedichtet werden. Es kann eine Dosiereinrichtung zum Zumischen des Stickstoffs vorhanden sein, mit der auch eine Nachdosierung von Stickstoff erfolgen kann. Das mit Stickstoff zumindest teilweise angereicherte Kühlmedium kann auch zur Kühlung während eines folgenden Lastbetriebs des Generators verwendet werden, um auch im Lastbetrieb Luftreibungsverluste zu reduzieren.

Bevorzugt wird die Dichte des Kühlmediums in dem Leerlaufbetrieb durch ein teilweises Ersetzen des Kühlmediums durch Wasserstoff unterhalb einer unteren Zündgrenze reduziert. Hierdurch kann im Leerlaufbetrieb, aber auch in einem folgenden Lastbetrieb des Generators, eine Kühlung des Generators unter geringerer Luftreibung erfolgen. Zudem sind keine aufwändigen Dichtungs- und Sicherheitsmaßnahmen erforderlich, da die untere Zündgrenze nicht erreicht wird.

Die Dichte des Kühlmediums in dem Leerlaufbetrieb wird bevorzugt durch ein Herstellen eines Unterdrucks innerhalb eines Gehäuses des Generators reduziert. Hierdurch können Luftreibungsverluste im Leerlaufbetrieb, aber auch in einem folgenden Lastbetrieb des Generators, reduziert werden. Jedoch wird hierdurch eine Wärmeabfuhrkapazität des Kühlmediums herabgesetzt.

Die vorstehend beschriebenen Ausgestaltungen des Verfahrens können einzeln oder in einer beliebigen Kombination bzw. Unterkombination miteinander zur Reduzierung der Dichte des Kühlmediums eingesetzt werden.

**Patentansprüche**

1. Verfahren zum Kühlen eines Generators unter Verwendung eines den Generator durchströmenden Kühlmediums,
   wobei eine Dichte des Kühlmediums in einem Leerlaufbetrieb des Generators, in dem der Generator passiv mit einer Netz-Frequenz eines Netzes mitdreht, an das der Generator angeschlossen ist, gegenüber einer Dichte des Kühlmediums in einem Lastbetrieb des Generators reduziert wird.

2. Verfahren gemäß Anspruch 1,
   wobei die Dichte des Kühlmediums in dem Leerlaufbetrieb durch eine Erhöhung einer Rückkühltemperatur reduziert wird, die zum Rückkühlen des Kühlmediums verwendet wird.

3. Verfahren gemäß Anspruch 1 oder 2,
   wobei die Dichte des Kühlmediums in dem Leerlaufbetrieb durch eine Erhöhung einer Luftfeuchte des Kühlmediums reduziert wird.

4. Verfahren gemäß einem der Ansprüche 1 bis 3,
   wobei die Dichte des Kühlmediums in dem Leerlaufbetrieb durch ein zumindest teilweises Ersetzen des Kühlmediums durch Stickstoff reduziert wird.

5. Verfahren gemäß einem der Ansprüche 1 bis 4,
   wobei die Dichte des Kühlmediums in dem Leerlaufbetrieb durch ein teilweises Ersetzen des Kühlmediums durch Wasserstoff unterhalb einer unteren Zündgrenze reduziert wird.

6. Verfahren gemäß einem der Ansprüche 1 bis 5,
   wobei die Dichte des Kühlmediums in dem Leerlaufbetrieb durch ein Herstellen eines Unterdrucks innerhalb eines Gehäuses des Generators reduziert wird.

**Europäisches Patentamt**
**European Patent Office**
**Office européen des brevets**

## EUROPÄISCHER RECHERCHENBERICHT

**Nummer der Anmeldung**

EP 15 15 2508

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2012 022421 A1 (RWE GENERATION SE [DE]) 22. Mai 2014 (2014-05-22) * Absätze [0012], [0013], [0014]; Abbildung 1 * | 1,6 | INV. H02K9/08 H02K9/12 H02K9/18 |
| | ----- | | |
| X | DE 10 2010 033942 A1 (VOITH PATENT GMBH [DE]) 15. Dezember 2011 (2011-12-15) | 1,2 | |
| A | * Absätze [0011], [0012], [0027]; Abbildung 1 * | 3-6 | |
| | ----- | | |
| X | GB 334 473 A (.) 4. September 1930 (1930-09-04) * Zusammenfassung; Abbildung 3 * | 1,2 | |
| | ----- | | |
| X | EP 1 612 916 A1 (GEN ELECTRIC [US]) 4. Januar 2006 (2006-01-04) | 1,6 | |
| A | * Absätze [0010], [0015], [0021]; Abbildung 1 * | 2-5 | |
| | ----- | | |

**RECHERCHIERTE SACHGEBIETE (IPC)**

H02K

Der vorliegende Recherchenbericht wurde für alle Patentansprüche erstellt

| Recherchenort | Abschlußdatum der Recherche | Prüfer |
|---|---|---|
| Den Haag | 22. Juli 2015 | Kovacsovics, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 15 2508

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-07-2015

| Im Recherchenbericht angeführtes Patentdokument | Datum der Veröffentlichung | Mitglied(er) der Patentfamilie | Datum der Veröffentlichung |
|---|---|---|---|
| DE 102012022421 A1 | 22-05-2014 | KEINE | |
| DE 102010033942 A1 | 15-12-2011 | KEINE | |
| GB 334473 A | 04-09-1930 | KEINE | |
| EP 1612916 A1 | 04-01-2006 | CA 2510073 A1<br>EP 1612916 A1<br>US 2005285458 A1 | 28-12-2005<br>04-01-2006<br>29-12-2005 |

EPO FORM P0461

Für nähere Einzelheiten zu diesem Anhang : siehe Amtsblatt des Europäischen Patentamts, Nr.12/82